# EUROPEAN PATENT SPECIFICATION

(11) **EP 3 982 160 B1**
(45) Date of publication and mention of the grant of the patent: **25.11.2026**
(21) Application number: 20200713.4
(22) Date of filing: 08.10.2020
(51) Int. Cl.: G01S 13/42, G01S 13/88, G01S 7/35, G01S 13/58, G01S 13/72

(54) **METHOD AND SYSTEM FOR INDOOR MULTIPATH GHOSTS RECOGNITION**
VERFAHREN UND SYSTEM ZUR ERKENNUNG VON MEHRWEGE-GEISTERZIELEN IN INNENRÄUMEN
PROCÉDÉ ET SYSTÈME DE RECONNAISSANCE DE FANTÔMES À TRAJETS MULTIPLES EN INTÉRIEUR

(43) Date of publication of application: 13.04.2022
(73) Proprietor: Imec VZW, 3001 Leuven (BE); Katholieke Universiteit Leuven, 3000 Leuven (BE)
(72) Inventor: Feng, Ruoyu, 3001 Leuven (BE); Bourdoux, Andre, 3001 Leuven (BE); Sahli, Hichem, 3001 Leuven (BE); Pollin, Sofie, 3001 Leuven (BE)
(74) Representative: Roth, Sebastian

(56) References cited:
- JP-A- 2017 096 840
- US-A1- 2015 204 972

## Description

The invention relates to radar-based indoor people detection and tracking, especially for multiple-input-multiple-output (MIMO) radars with collocated antennas.

Generally, collocated MIMO radars facilitate the exploitations of virtual antenna arrays with an angular resolution that is better than the resolution of the transmitter and the receiver alone. However, as with all indoor radar tracking and detection, MIMO radars suffer from multipath reflections. The multipath effect is challenging for radar sensing applications, especially in indoor scenarios due to dense static objects such as walls and furniture. Such multipath generates non-existing targets in radar detection, which are known in the art as "ghosts". In the art, ray-tracing is commonly used, which assumes that the geometry information of the multipath is the prior knowledge.

For example, the document CN 109270526 A shows a method for locating a corner object by using ray-tracing. However, beamforming, especially for a collocated MIMO radar, is not a suitable technique since the angle of ghosts cannot be estimated for MIMO radar with virtual antenna array and multipath. Therefore, the geometry of the multipath commonly used in ray-tracing based approach cannot be utilized for MIMO radars.

Accordingly, the object of the invention is to provide a method and a device for indoor multipath ghosts recognition without using prior knowledge of the room geometry and to further perform target tracking and room boundary estimation.

The object is solved by the features of the first independent claim for the method and by the features of the second independent claim for the system. The dependent claims contain further developments.

According to a first aspect of the invention, a method is provided for indoor multipath ghosts recognition for a multiple-input-multiple-output radar with collocated antennas. The method comprises the step of generating a two-dimensional Range-Doppler map for N number of consecutive radar data frames. The method further comprises the step of applying a temporal clustering algorithm to the N number of consecutive radar data frames. Moreover, the method comprises the step of applying a linear pattern extraction algorithm on the two-dimensional Range-Doppler map. In this context, the two-dimensional Range-Doppler map comprises detections from at least one target, at least one first-order ghost, and at least one second-order ghost with respect to one wall reflector.

Advantageously, the linear pattern extraction algorithm is preferably a split-and-merge algorithm, more preferably a Random Sample Consensus algorithm, most preferably a Hough transform based linear pattern extraction algorithm. Alternately, the linear pattern extraction algorithm can be based on Incremental algorithm, Line-Regression algorithm, Expectation-Maximization algorithm, and the like.

Therefore, the proposed solution addresses multipath problem for radar-based localization systems, especially in indoor scenarios, where multipath is caused by the reflection from static objects like walls and furniture in the room and it creates false alarms in radar detection (ghosts). The solution addresses the specific case of collocated MIMO radars in multipath environment by exploiting a linear pattern of multipath ghosts in the Range-Doppler map. The proposed solution further solves the low detectability of any multipath components with a temporal clustering algorithm, preferably a density-based spatial clustering of applications with noise (DBSCAN) algorithm.

According to a first preferred implementation form of said first aspect of the invention, the method further comprises the step of recognizing, by means of the linear pattern extraction algorithm, a set of three points in the two-dimensional Range-Doppler map corresponding to the detections from the at least one target, the at least one first-order ghost, and the at least one second-order ghost. In this regard, the set of three points in the two-dimensional Range-Doppler map are aligned and are preferably equidistant.

Therefore, a pattern of the detections from the target and the multipath ghosts is recognized by means of the linear pattern extraction algorithm that advantageously detects all lines connecting the three points in the Range-Doppler map. Upon detecting said three points on a line, the distances between the detections are observed in order to evaluate if the distance from the target to the first-order ghost is equal to the distance from the first-order ghost to the second-order ghost. If this is verified, the triplet is considered for further processing.

According to a second preferred implementation form of said first aspect of the invention, the method further comprises the step of comparing respective Range and Doppler values of the set of three points in the two-dimensional Range-Doppler map, thereby recognizing the respective detections from the at least one target, the at least one first-order ghost, and the at least one second-order ghost.

Therefore, upon recognizing the set of three aligned and equidistant points in the two-dimensional Range-Doppler map, the respective Range or Doppler values are compared so as to identify the respective detections of the target and the multipath ghosts. For instance, with respect to measured Range values, the detection or point with the closest range is the actual target, and the first-order and the second-order ghosts are the ones with the mid and far range, respectively.

According to a further preferred implementation form of said first aspect of the invention, the method further comprises the step of implementing a tracking algorithm in order to estimate a state of the at least one target. In addition to this or as an alternative, the method further comprises the step of implementing a joint target tracking and wall estimation algorithm in order to estimate a state of the at least one target and of the at least one second-order ghost. It is advantageous that the tracking algorithm comprises non-linear filtration, preferably an Extended Kalman Filter. Therefore, in addition to multipath ghosts detection, a real-time target tracking is also incorporated.

According to a further preferred implementation form of said first aspect of the invention, the method further comprises the step of implementing a model, preferably a Simultaneous Target and Multipath Positioning model, in order to estimate parameters of a reflector associated with the at least one first-order ghost and the at least one second-order ghost.

Therefore, in addition to multipath ghosts detection, a reflector or wall estimation is incorporated while performing the real-time target tracking.

According to a further preferred implementation form of said first aspect of the invention, the two-dimensional Range-Doppler map further comprises detections from a plurality of targets, a plurality of first-order ghosts, and a plurality of second-order ghosts. In this regard, the method further comprises the step of applying an iterative algorithm comprising the above-mentioned steps for each of the plurality of targets. Advantageously, for multiple targets with more ghosts detected, the proposed solution can be implemented iteratively in order to distinguish the targets and the ghosts step by step.

According to a further preferred implementation form of said first aspect of the invention, the at least one target and/or the plurality of targets are non-rigid targets. Therefore, the target, e.g., a pedestrian, is an extended and non-rigid target, where the pedestrian is modeled as a torso and two arms in the multipath geometry.

According to a further preferred implementation form of said first aspect of the invention, the multiple-input-multiple-output radar is a Doppler radar, preferably a frequency-modulated continuous-wave radar. Therefore, the MIMO radar, especially in short-range, is able to perform distance measurements along with speed measurements with a high reliability, which is advantageous for simultaneous target tracking and room boundary estimation.

According to a second aspect of the invention, a system for indoor multipath ghost recognition is provided. The system comprises a multiple-input-multiple-output radar with collocated antennas and a processor operably coupled to the multiple-input-multiple-output radar. The processor is configured to generate a two-dimensional Range-Doppler map for N number of consecutive radar data frames. The processor is further configured to apply a temporal clustering algorithm to the N number of consecutive radar data frames. Moreover, the processor is configured to apply a linear pattern extraction algorithm on the two-dimensional Range-Doppler map.

In this context, the two-dimensional Range-Doppler map comprises detections from at least one target, at least one first-order ghost, and at least one second-order ghost with respect to one wall reflector. Advantageously, the linear pattern extraction algorithm is preferably a split-and-merge algorithm, more preferably a Random Sample Consensus algorithm, most preferably a Hough transform based linear pattern extraction algorithm. Therefore, the proposed solution addresses multipath problem for radar-based localization systems, especially in indoor scenarios.

Exemplary embodiments of the invention are now further explained with respect to the drawings by way of example only, and not for limitation. In the drawings:
- Fig. 1A: shows an exemplary multipath geometry of radar detections with multipath;
- Fig. 1B: shows Doppler velocity of the target and the ghosts for the multipath geometry of Fig. 1A;
- Fig. 2: shows an exemplary embodiment of the method according to the first aspect of the invention;
- Fig. 3: shows an exemplary embodiment of the system according to the second aspect of the invention;
- Fig. 4A: shows an exemplary Range-Doppler map of the single target and its ghosts;
- Fig. 4B: shows an exemplary temporal clustering of three frames of Range-Doppler map;
- Fig. 5A: shows simulated statistics of multipath ghosts recognition using Hough transform without and with temporal clustering by way of an example;
- Fig. 5B: shows measurement statistics of multipath ghosts recognition using Hough transform without and with temporal clustering by way of an example;
- Fig. 6: shows an exemplary processing chain of the proposed algorithm;
- Fig. 7A: shows an exemplary tracking of a single pedestrian before and after Hough transform based ghost mitigation;
- Fig. 7B: shows an exemplary tracking of two pedestrians before and after Hough transform based ghost mitigation;
- Fig. 8A: shows an exemplary scenario of the measurement for joint tracking and wall estimation of a single target; and
- Fig. 8B: shows the measurement results for the measurement scenario of Fig. 8A.

Reference will now be made in detail to the embodiments of the present invention, examples of which are illustrated in the accompanying drawings. However, the following embodiments of the present invention may be variously modified and the range of the present invention is not limited by the following embodiments.

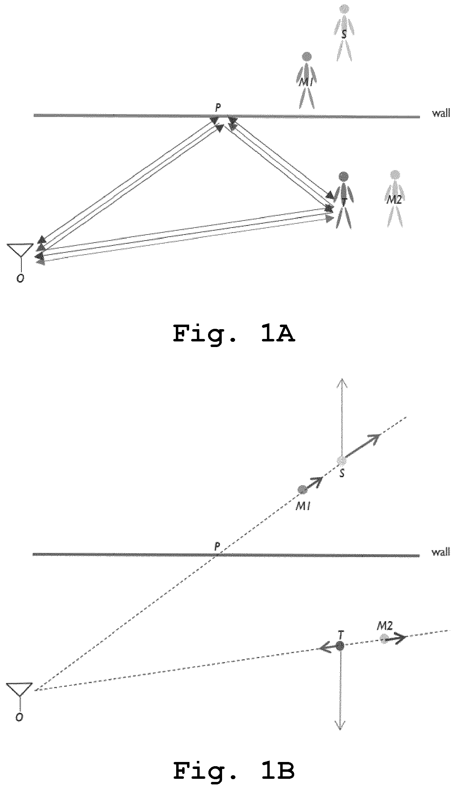

Along Fig. 1A and Fig. 1B, a multipath geometry of radar detections with multipath ghosts and their respective Doppler velocity are illustrated by way of an example. The propagation paths of the radiation wave are illustrated by arrows. In this example, for a single target in the field of view, there are four propagation paths of the radar radiation. The radar is at point O, and the target is at point T. The direct reflection path OT+TO creates the detection of the real target in the received echo signals. Due to the scatter of the target and specular reflection of the wall, the indirect path includes OP+PT+TO, OT+TP+PO, and OP+PT+TP+PO. These indirect propagation paths create the detection of the ghosts, which are called the first-order ghost M1, the first-order ghost M2 and the second-order ghost S, respectively.

Given the multipath geometry, for a wall reflector, the information of the ghosts M1, M2 and S can be derived from the real target T and the wall position. Most popular state-of-the-art solutions assume prior knowledge of the room boundary and make use of ray-tracing to resolve the multipath problem. However, such prior knowledge is not realistic in real-world applications. Moreover, said ray-tracing approach utilizes the geometry information and the position of the real target to localize the ghosts and remove them. However, it relies on the accurate estimation of the targets' position using range-angle information. For a MIMO radar, due to the usage of virtual antenna, the direction-of-arrival (DoA) and the direction-of-departure (DoD) are not equal for the first-order ghosts as indicated in Fig. 1A, which makes the classical beamforming not able to estimate the angle of the first-order ghosts.

Therefore, without the correct angle estimation, the solution in the state-of-the-art is not applicable to a MIMO radar working in multipath environment, even if the room boundary is already known. Another solution in the state-of-the-art uses tracking algorithms with multipath models, which also do not require the room geometry information. However, such methods apply complicated multipath model, which is difficult to implement in a real-time system.

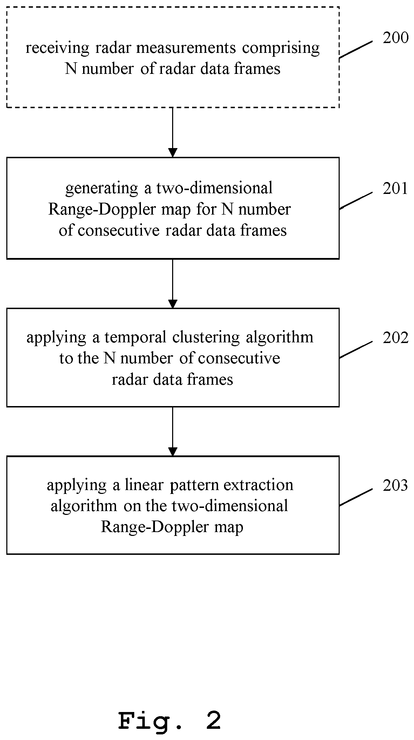

In Fig. 2, an exemplary embodiment of the method according to the first aspect of the invention is illustrated. In an optional step 200, radar measurements comprising N number of radar data frames are received and are processed. In a first step 201, a two-dimensional Range-Doppler map is generated for the N number of consecutive radar data frames. In addition, the two-dimensional Range-Doppler map is processed in order to generate the Range-Doppler detections. In a second step 202, a temporal clustering algorithm is applied to the N number of consecutive radar data frames. In a third step 203, a linear pattern extraction algorithm is applied on the Range-Doppler detections. In this context, the two-dimensional Range-Doppler map or image is processed, for instance, by a constant false alarm rate (CFAR) detector in order to generate the detections.

Further advantageously, in a consecutive step, a set of three aligned and equidistant points in the two-dimensional Range-Doppler map is recognized by means of the linear pattern extraction algorithm, where the points correspond to the detections from the at least one target, the at least one first-order ghost, and the at least one second-order ghost.

In a further consecutive step, the respective Range and Doppler values of the set of three points in the two-dimensional Range-Doppler map are compared with respect to each other, thereby recognizing the respective detections from the at least one target, the at least one first-order ghost, and the at least one second-order ghost.

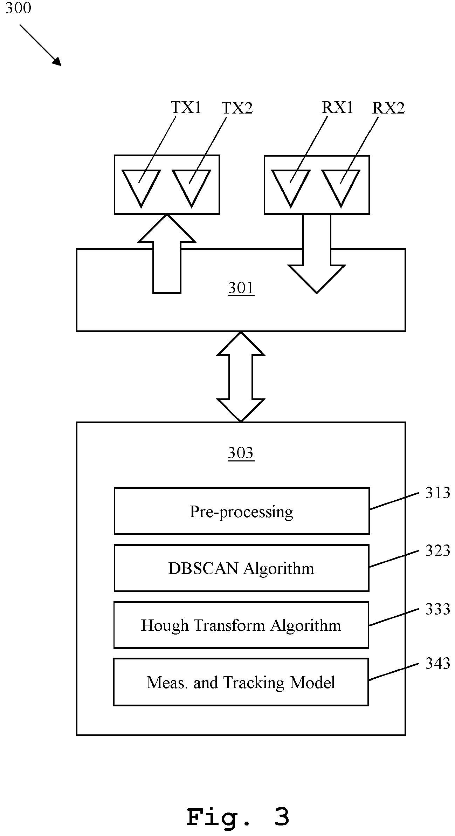

In Fig. 3, an exemplary embodiment of the system 300 according to the second aspect of the invention is illustrated. The system 300 comprises a multiple-input-multiple-output radar 301 with collocated antennas TX1, TX2, RX1, and RX2. The system 300 further comprises a processor 303 operably coupled to the multiple-input-multiple-output radar 301. The term operably coupled means that the connection between the radar 301 and the processor 303 can be wireless or wired. Additionally, the radar 301 and the processor 303 can be incorporated into a single housing or setup. Alternately, the processor 303 can be implemented such that it can operate on the radar 301 from a remote location.

The processor 303 essentially gathers radar raw data by e.g., de-chirping of the radar echo signals and further performs pre-processing of the raw data. In this regard, the processor 303 generates a two-dimensional Range-Doppler map for N number of consecutive radar data frames and further processes the two-dimensional Range-Doppler map by means of a constant false alarm rate (CFAR) detector, e.g., an ordered-statistic constant false alarm rate (OS-CFAR) detector in order to generate the detections. The processor 303 then applies a temporal clustering algorithm, preferably a DBSCAN clustering algorithm. In order to do so, for every consecutive N frames of radar data, i.e. the frames comprising the Range-Doppler data, the processor 303 overlaps the Range-Doppler detections into the same two-dimensional map and applies the DBSCAN algorithm on the clustered data.

Turning back to the multipath geometry of Fig. 1A, the wall is assumed as an ideal specular reflector and the position of the wall can be described by a linear equation such as: $Ax + By + C = 0$ (1)

The second-order ghost S is the mirror image of the real target T and has the symmetric position and velocity to the real target T. Given the position (*x_{T},y_{T}*) and the velocity (*ẋ_{T},ẏ_{T}*) of the real target T, the position and the velocity of the second-order ghost can be estimated as: ${x}_{S} = \frac{\left({B}^{2}-{A}^{2}\right) {x}_{T} - 2 {ABy}_{T} - 2 AC}{\sqrt{{x}^{2} + {y}^{2}}}$ (2a) ${y}_{S} = \frac{\left({A}^{2}-{B}^{2}\right) {y}_{T} - 2 {ABx}_{T} - 2 BC}{\sqrt{{x}^{2} + {y}^{2}}}$ (2b) ${{x}_{S}}^{.} = \frac{\left({B}^{2}-{A}^{2}\right) {{x}_{T}}^{.} - 2 AB {{y}_{T}}^{.}}{\sqrt{{x}^{2} + {y}^{2}}}$ (2c) ${\dot{y}}_{S} = \frac{\left({A}^{2}-{B}^{2}\right) {\dot{y}}_{T} - 2 AB {\dot{x}}_{T}}{\sqrt{{x}^{2} + {y}^{2}}}$ (2d)

Where, the subscripts T and S denotes the actual target and the second-order ghost, respectively.

The range-angle in polar coordinates of T and S are (*R_{T},D_{T}*) and (*R_{S},D_{S}*) respectively, which can be calculated using the position and velocity. It is also conceivable from Fig. 1A that the propagation of the first-order ghosts M1 and M2 can be regarded as between the real target T and the second-order ghost S. The Range-Doppler of M1 and M2 are hence identical and are given by: ${R}_{M 1} = {R}_{M 2} = \frac{1}{2} \left({R}_{T}+{R}_{S}\right)$ (3a) ${D}_{M 1} = {D}_{M 2} = \frac{1}{2} \left({D}_{T}+{D}_{S}\right)$ (3b)

Therefore, it can be seen that the Range-Doppler information of T, M and S are related. This particular pattern also shows that if the T, M and S are aligned along a line, they are equidistant with respect to each other. The proposed solution utilizes this distinctive pattern of the received echo signals in order to detect and to further eliminate ghosts from radar echo signals.

In order to detect such patterns, the processor 303 applies a Hough transform based linear pattern extraction algorithm to detect all lines connecting the points corresponding to T, M and S in the Range-Doppler map. The Hough transform is a popular method in image processing to recognize the lines from two-dimensional point clouds. The Hough transform represents a line in the Hesse normal form, which is: $r = x cos θ + y sin θ$ (4) where r is the distance from the origin to the closest point on the line and θ is the rotation angle of the line connecting the origin with that closest point. Through this equation the lines in x-y space can be mapped to the Hough space, which enables the Hough transform algorithm to use a two-dimensional accumulator, to search the existence of linear relations in the parameters (*r,θ*). For each detection in the Range-Doppler map (*R,D*), the accumulator counts the number of points that fall into the bin representing a particular line.

In the algorithm proposed by this invention, if three points corresponding to T, M and S are confirmed on a detected line of parameter (*r,θ*), the processor 303 estimates the distance between them to evaluate if the distance from the target T to the first-order ghost M is equal to the distance from the first-order ghost M to the second-order ghost S. If this is verified, the triplet is considered for further processing. Alternatively, if the difference between the two distances is smaller than a threshold, the triplet is considered for further processing. The aforesaid alternative approach is effective since most targets are considered as extended and non-rigid targets, which may lead to a level of uncertainty in the linear pattern extraction. Further advantageously, the Hough transform handles noisy data/points by finding approximate lines, which further ease the process with extended targets as pedestrians.

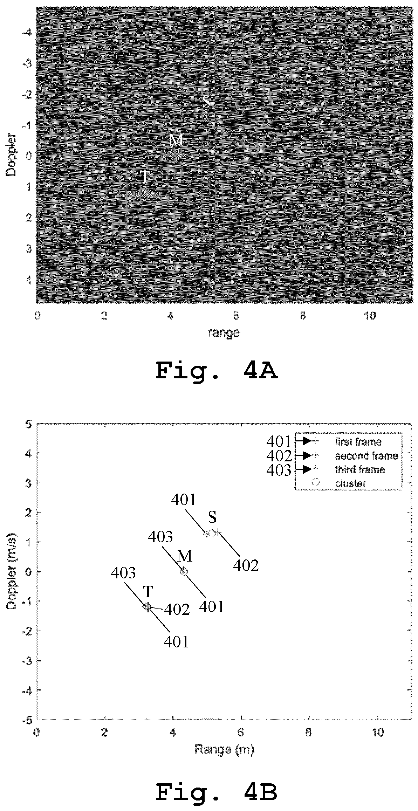

In Fig. 4A, a Range-Doppler map of the single target and its ghosts is illustrated by way of an example. On the two-dimensional Range-Doppler map, the horizontal axis represents the measured range in meters and the vertical axis represents the measured Doppler velocity in meter per second. For instance, according to equations 3a and 3b, and with respect to measured range values, the detection or point with the closest range is the actual target T, and the first-order ghost M and the second-order ghosts S are the ones with the mid and far range, respectively.

The above-mentioned algorithm relies on the fact that, in the Range-Doppler map, each single target (with a wall) has three detections: T, M and S. However, in the low signal-to-noise ratio (SNR) condition, ghosts can be miss detected in some frames of Range-Doppler map, which leads to failure in ghost recognition since not all three points can be found. To resolve this issue, the processor 303 applies the temporal clustering algorithm. In this regard, the processor 303 overlaps the N consecutive frames of Range-Doppler maps, and then applies a DBSCAN clustering to these Range-Doppler detections. In other words, for every consecutive N frames of MIMO radar data, the processor 303 overlaps the Range-Doppler detections into the same two-dimensional map and applies the DBSCAN algorithm on the clustered data that has a higher probability of containing all ghosts.

In Fig. 4B, an exemplary temporal clustering of three frames of Range-Doppler map is illustrated. On the two-dimensional Range-Doppler map, the horizontal axis represents the measured range in meters and the vertical axis represents the measured Doppler velocity in meter per second. It can be seen that the detection of the target T is present in the first frame 401, the second frame 402 and the third frame 403. The detection of the first-order ghost M is present in the first frame 401 and in the third frame 403. Thus, the first-order ghost M is miss-detected in the second frame 402.

Moreover, the detection of the second-order ghost S is present in the first frame 401 and in the second frame 402. Thus, the second-order ghost S is miss-detected in the third frame 402. However, after temporal clustering, denoted by the circle for each of the target T, first-order ghost M and second-order ghost S, the linear pattern with three centroids can be recognized. Hence, even in some frames the ghosts are miss detected, after temporal clustering a linear pattern should be confirmed in the overlapped Range-Doppler maps.

Another benefit of temporal clustering is that the clutter that normally appears in some scans are advantageously removed since the clutter is not supposed to be stable within consecutive frames.

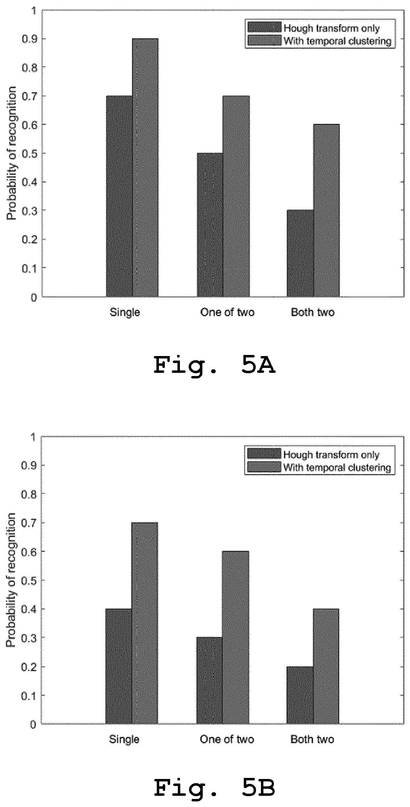

Along Fig. 5A and Fig. 5B, the performance of Hough transform based ghost recognition is visualized. Fig. 5A shows the simulated probability of successful ghost recognition in simulations for single target scenario (left), two targets scenario with the detection of one of the targets (middle), and two targets scenario with the detection of both targets (right). Fig. 5B shows the actual probability of successful ghost recognition in a real environment for single target scenario (left), two targets scenario with the detection of one of the targets (middle), and two targets scenario with the detection of both targets (right) .

As it can be seen, the incorporation of the clustering algorithm drastically improves the detection performance for all scenarios, where the improvements are more significant as the number of targets increases. It can also be seen that, compared to the simulation results, the actual probability of ghosts recognition is slightly decreased. One reason can be that the target is a real pedestrian in the actual probability performance, which is an extended and non-rigid target. Another reason can be that the real environment is harsher and has more clutter that can confuse the linear pattern extraction algorithm.

Turning back to Fig. 3, it can be summarized that the processor 303 essentially performs pre-processing 313 of the raw radar data, for instance, de-chirping and plotting the raw data into a two-dimensional Range-Doppler map for each radar data frame or data cubelet. The processor 303 further performs temporal clustering 323 on the consecutive radar data frames, especially by applying a DBSCAN clustering algorithm. The processor 303 then applies Hough transform based linear pattern extraction algorithm 333 in order to detect the target and the multipath ghosts in radar detection as well as to mitigate or eliminate the multipath ghosts. In addition, the processor 303 further executes measurement models in order to enhance the ghost detection and further executes tracking models 343 in order to perform multipath-assisted tracking and joint wall estimation. The measurement models and the tracking models 343 are detailed in the following sections.

As already described above, the Hough transform based ghosts recognition can determine whether the detection is the real target T, first-order ghost M or second-order ghost S. Considering the multipath geometry in Fig. 1A, although the beamforming is not able to correctly estimate the angle of the first-order ghosts M, the angle of the real target T and second-order ghosts S can still be obtained. As a result, a joint tracking and wall estimation algorithm can be obtained through combining a direct-path and an in-direct path measurement model. The proposed solution further facilitates a multipath-assisted tracking and joint wall estimation, especially realized with Hough transform algorithm, with much lower computational complexity.

In a normal tracking model using a dynamic model with a constant velocity moving target, multipath is not taken into account, and states of the target is estimated by extended Kalman filter (EKF) through measurement model of the direct path. Considering the linear equation in (1), the line can expressed in Hesse normal form as by the parameters of (*ρ,ψ*), where ρ indicates the position of the radar to the closest point on the wall and ψ describes the angle of the line to the point on the wall. Thus, the dynamic of joint tracking and wall estimation with constant velocity motion is defined as: $\left[\begin{matrix}{x}_{k} \\ {y}_{k} \\ {{x}_{k}}^{.} \\ {{y}_{k}}^{.} \\ {ρ}_{k} \\ {ψ}_{k}\end{matrix}\right] = \left[\begin{matrix}{F}_{k} & {0}_{2 , 2} \\ {0}_{2 , 2} & {I}_{2 , 2}\end{matrix}\right] ⋅ \left[\begin{matrix}{x}_{k - 1} \\ {y}_{k - 1} \\ {{x}_{k - 1}}^{.} \\ {{y}_{k - 1}}^{.} \\ {ρ}_{k - 1} \\ {ψ}_{k - 1}\end{matrix}\right] + \left[\begin{matrix}{w}_{k} \\ {0}_{2 , 1}\end{matrix}\right]$ (5) where *Fₖ* is the constant velocity model, *wₖ* is the 4 by 1 zero mean Gaussian white noise vector with covariance matrix Q, and the noise of the wall is a 2 by 1 0 vector since the wall is fixed. The tracker with only the targets motion is called independent track *x_{I}*, while the tracker with both targets motion and wall parameters here is called joint tracker *x_{J}*.

If multipath is considered, each single target can generate both direct and in-direct path measurement. Consider the case where there is a single target and a single wall in the room. After the target T and the ghosts M1, M2, S have already been recognized by Hough transform based linear pattern extraction, the detections of M1 and M2 will be removed but T and S will be used in the tracking model. Each group of T and S is defined as a joint measurement, while the detection without the ghosts found is defined as an independent measurement, where (*R_{T},θ_{T},D_{T}*) is obtained by the direct-path model, and (*R_{S},θ_{S},D_{S}*)is obtained by the in-direct-path model.

The measurement model for the EKF is defined as: $h \left(x, y, \dot{x}, \dot{y}\right) = \left[\begin{matrix}\sqrt{{x}^{2} + {y}^{2}} \\ atan \left(\frac{y}{x}\right) \\ \frac{x \dot{x} + y \dot{y}}{\sqrt{{x}^{2} + {y}^{2}}}\end{matrix}\right]$ (6) where (*x,y,ẋ,ẏ*) is the position and velocity of the target T in Cartesian coordinate. The measurement model *h_{T}* of the real target T is obtained by (*x_{T},y_{T},ẋ_{T},ẏ_{T}*), while the measurement model *h_{S}* of the second-order ghost S is obtained by (*x_{S},y_{S},ẋ_{S},ẏ_{S}*), which are calculated using equation (2). Given the measurement model, the independent and joint measurements are obtained by ${\hat{z}}_{{I}_{k \left|k-1\right.}} = {h}_{{T}_{k}} \left({x}_{{T}_{k}}\right) + {v}_{{T}_{k}}$ (7) ${\hat{z}}_{{J}_{k \left|k-1\right.}} = \left[\begin{matrix}{h}_{{T}_{k}} \left({x}_{{T}_{k}}\right) \\ {h}_{{S}_{k}} \left({x}_{{S}_{k}}\right)\end{matrix}\right] + \left[\begin{matrix}{v}_{{T}_{k}} \\ {v}_{{S}_{k}}\end{matrix}\right]$ (8) where **ẑ***_{Ik}*|*k*-1 and **ẑ***_{Jk}*|*k*-1 indicate independent and joint measurement vector of the prediction state **x***_{Tₖ}* and **x***_{Sₖ}* of the real target T and second-order ghost S, respectively, and *vₖ* is the measurement noise.

Until now, the independent and joint tracking and the independent and joint measurements are discussed for target tracking in multipath environment. The independent measurement model and tracker is running for normal moving targets, and once the Hough transform based algorithm finds out any ghosts, the joint measurement model and tracker will be active, thereby initiating the joint moving targets tracking and wall parameters estimation. The proposed solution further incorporates a multipath data association algorithm in order to handle the measurement associated to the track in the situations of independent to independent, independent to joint, joint to independent and joint to joint.

For an independent tracker, the validation regions of independent and joint measurements are defined as: ${V}_{II} = \left\{{z}_{I}:{\left[{z}_{I}-{\hat{z}}_{{I}_{k \left|k-1\right.}}\right]}^{T}{S}_{{I}_{k}}^{- 1}\left[{z}_{I}-{\hat{z}}_{{I}_{k \left|k-1\right.}}\right]\leq γ\right\}$ (9a) ${V}_{IJ} = \left\{{z}_{J}:{\left[\left[\begin{matrix}{z}_{J} \left(1\right) \\ {z}_{J} \left(2\right) \\ {z}_{J} \left(3\right)\end{matrix}\right]-{\hat{z}}_{{J}_{k \left|k-1\right.}}\right]}^{T}{S}_{{I}_{k}}^{- 1}\left[\left[\begin{matrix}{z}_{J} \left(1\right) \\ {z}_{J} \left(2\right) \\ {z}_{J} \left(3\right)\end{matrix}\right]-{\hat{z}}_{{I}_{k \left|k-1\right.}}\right]\leq γ\right\}$ (9b) where *γ* is a threshold of the gate. The *V_{II}* checks out whether an independent track falls into the gate to update the independent tracker. Once there are some ghosts detected, the joint measurement integrates the detection of T and S together. The measurement of T (first 3 rows in the joint measurement vector) is then used in *V_{IJ}* to check whether a joint measurement should be associated to the independent track. Once the joint measurement falls into the gate *V_{IJ}*, it means that the wall is confirmed and should be tracked by the joint dynamic model. This will happen in the case that a moving target is moving forward to a wall, and the ghosts are detected after the targets is getting closer to the wall.

When the joint tracker is active, the validation regions of independent and joint measurements are defined as: ${V}_{JI} = \left\{{z}_{I}:{\left[{z}_{I}-\left[\begin{matrix}{\hat{z}}_{{I}_{k \left|k-1\right.}} \left(1\right) \\ {\hat{z}}_{{I}_{k \left|k-1\right.}} \left(2\right) \\ {\hat{z}}_{{I}_{k \left|k-1\right.}} \left(3\right)\end{matrix}\right]\right]}^{T}{S}_{{I}_{k}}^{- 1}\left[{z}_{I}-\left[\begin{matrix}{\hat{z}}_{{I}_{k \left|k-1\right.}} \left(1\right) \\ {\hat{z}}_{{I}_{k \left|k-1\right.}} \left(2\right) \\ {\hat{z}}_{{I}_{k \left|k-1\right.}} \left(3\right)\end{matrix}\right]\right]\leq γ\right\}$ (10a) ${V}_{JJ} = \left\{{z}_{J}:{\left[{z}_{J}-{\hat{z}}_{{J}_{k \left|k-1\right.}}\right]}^{T}{S}_{{I}_{k}}^{- 1}\left[{z}_{J}-{\hat{z}}_{{J}_{k \left|k-1\right.}}\right]\leq γ\right\}$ (10b)

The joint tracker keeps working when ghosts are observed and the joint measurement falls into the gate *V_{JJ}*. When the ghosts cannot be detected, the gate *V_{JI}* still checks if there is any independent measurement that can be associated to the tracker. This scenario will happen when a target is moving away from the wall, and, if the distance is large, the ghosts will not be observed. Then a joint tracker is not necessary to continue estimating the wall parameters. From the above description, it is conceivable that the multipath data association not only associates the measurement to the tracks but also decides the existence of a wall.

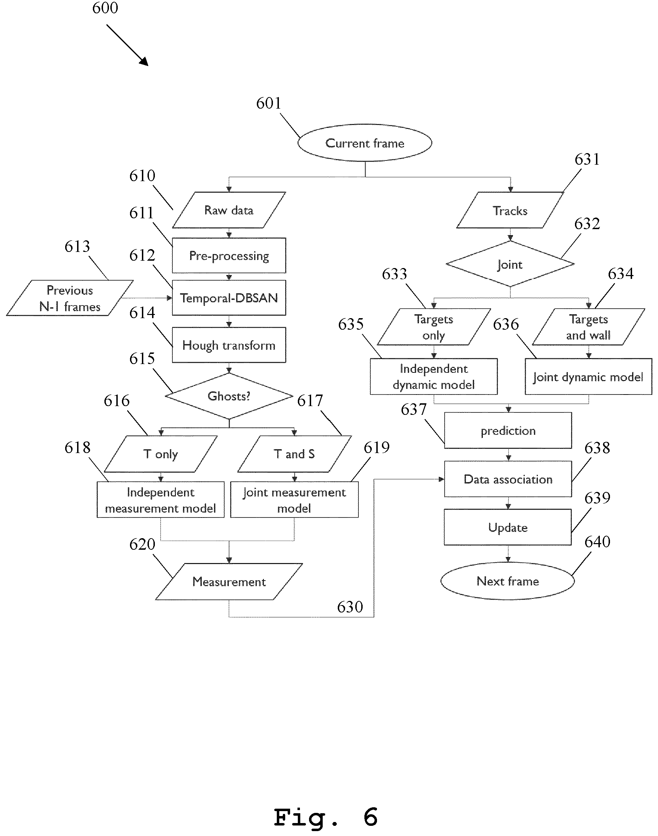

In Fig. 6, the process chain 600 of the proposed algorithm 600 is shown. The process chain 600 is herein represented by illustrating the process flow for ghost recognition, joint tracking and wall estimation, which are executed by the processor 303. Generally, the left side of the process chain 600 represents ghost recognition and/or mitigation and the right side represents the joint tracking and wall estimation.

The algorithm initiates for a current radar data frame 601 and accumulates the raw data 610. In a following step 611, the raw radar data are pre-processed, for instance by de-chirping and by plotting on a two-dimensional Range-Doppler map and further generating Range-Doppler detections, e.g. by a CFAR detector. In a further step 612, a temporal clustering algorithm is applied, especially based on the DBSCAN clustering algorithm. In this step, N-1 previous consecutive radar data frames are taken into account along with the current radar data frame. In a further step 614, a Hough transform based linear pattern extraction algorithm is applied in order to detect as well as distinguish the detections.

Upon the detection of target and/or ghosts, the algorithm checks 615 whether the detections correspond to the target alone or target and the ghosts. If the detection only comprises the target 616, the algorithm initiates the independent measurement model 618 as described above. If the detection comprises both target and at least the second-order ghost 617, the algorithm initiates the joint measurement model 619 as described above. For both cases, the measurement data 620 are utilized for data association. Therefore, for each radar frame observation, an independent or a joint measurement is obtained, where the independent measurement is the range, angle and Doppler of the target only while the joint measurement is the combination of the measurement from the target T and the second-order ghost S.

For each tracking step 631, the algorithm estimates that there are independent tracks and/or joint tracks from the previous step. The independent track 633 is valid when there is only a target measured, while the joint track 634 means that both target and the corresponding reflector could be identified as ghosts were detected. Therefore, the algorithm facilitates two types of tracking models, namely an independent tracking model 635 and a joint tracking model 636, depending on the ghost detection scenario. However, a joint detection could also be associated to an independent track when a target is moving close to the wall and suddenly the ghosts appear. Similarly, a joint detection could also be associated to an independent track when a target moves away from a wall and the ghosts disappear.

The algorithm then performs predictions based on either independent tracking model 635 or joint tracking model 637, thereby estimating the room boundary, which is followed by measurement data association from either the independent measurement model 618 or the joint measurement model 619. The filter parameters are updated 639 accordingly and the next radar frame 640 is initiated, where the algorithm executes the above-mentioned processes iteratively.

The radar measurement obtained from the measurement models may correspond to the target T or both target T and second-order ghost S. The tracking models track targets independently or perform joint target and wall tracking, especially by using an extended Kalman filter. The radar measurements detecting a target T or target of ghost S are associated to both independent and joint tracks, so that for each time the extended Kalman filter parameters are updated of all tracks.

Therefore, for each frame of radar data cublet, temporal-clustering is applied to the range-Doppler maps of consecutive N frames. The Hough-transform based ghosts recognition determines whether there is a group of the target T, first-order ghost M and second-order ghost S in the radar detection. The first-order ghost M is mitigated, however, the target T and the second-order ghost S are utilized for joint tracking and wall estimation.

Once the target T and the second-order ghost S are determined, the measurements are fed to the joint tracking and wall estimation part. The multipath data association algorithm associates the independent or joint measurement to an independent or joint tracker, and simultaneously confirms the existence and non-existence of the wall. The output of the algorithm recognizes the multipath ghosts in the radar detection and through the real target T and second-order ghost S detection; the tracking result includes both the motion of the targets and the position of the wall.

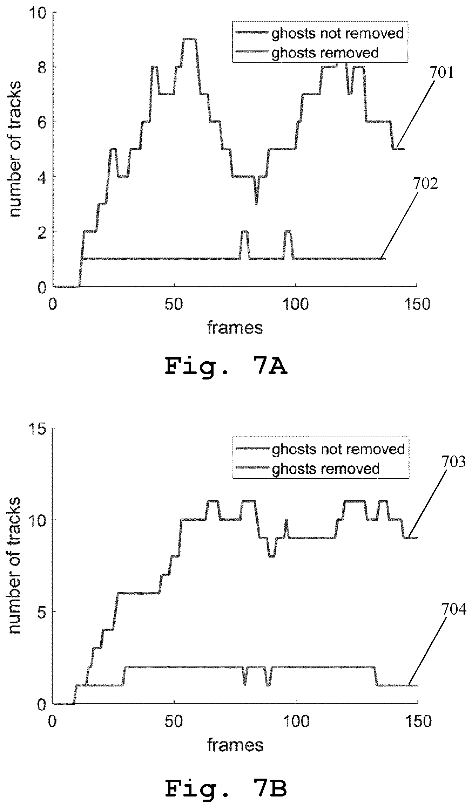

Along Fig. 7A and Fig. 7B, tracking of real targets are illustrated. Particularly, in Fig. 7A, the tracking of a single pedestrian is illustrated where the upper tracks 701 represent tracks when the ghosts are not removed, whereas the lower tracks 702 represent tracks when the ghosts are removed. Similarly, in Fig. 7A, the tracking of two pedestrians is illustrated where the upper tracks 703 represent tracks when the ghosts are not removed, whereas the lower tracks 704 represent tracks when the ghosts are removed. It can be seen that, even when there is only one real target, standard tracking creates a significant number of false tracks due to strong multipath reflections. However, after mitigating the ghosts using the proposed solution, most of the false tracks are advantageously removed.

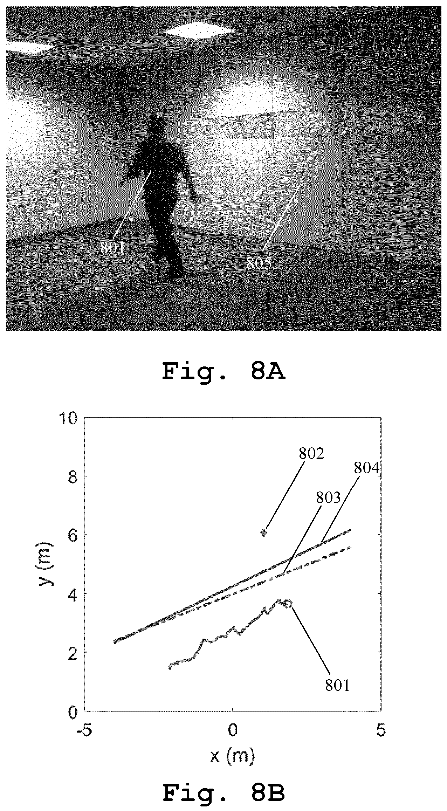

Along Fig. 8A and Fig. 8B, the joint tracking and wall estimation of a single target are illustrated. In particular, Fig. 8A shows the scenario of the measurement where a single pedestrian 801 moves along a wall 805, which acts as a specular reflector. In Fig. 8B, the measurement result for the measurement scenario of Fig. 8A is illustrated. The X-Y map is plotted for both the real target 801 and the second-order ghost 802, where both axes represent distance in meters. It can be seen, based on the trajectory of the target 801, the wall converges from the dashed line 803 to the solid line 804, which at this point reflects the actual boundary of the wall 805.

It is to be noted that the inventive ghost recognition and mitigation scheme is not limited to Hough transform based linear pattern extraction algorithm as described above. The proposed linear pattern extraction algorithm can be implemented using any line extraction algorithm and further by checking the periodicity of the three collinear and equidistant points representing the target T, first-order ghost M and second-order ghost S. As an extreme measure, it is further possible to iteratively check if there is a point located in the segments of the other two points by setting a threshold of the position error.

The embodiments of the present invention can be implemented by hardware, software, or any combination thereof. Various embodiments of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or the like.

## Claims

1. A method for indoor multipath ghosts recognition for a multiple-input-multiple-output radar with collocated antennas for at least one target with respect to an indoor dense static object in form of a wall, the method, being carried out by a processor (303) operably coupled to the multiple-input-multiple-output radar (301), comprises the steps of:
Generating (201) a two-dimensional Range-Doppler map for N number of consecutive radar data frames comprising Range-Doppler detections,
Overlapping the Range-Doppler detections for each of the N number of consecutive radar data frames,
Applying (202) a temporal clustering algorithm to the N number of consecutive radar data frames, and
Applying (203) a linear pattern extraction algorithm on the two-dimensional Range-Doppler map to recognise a pattern of detections from the at least one target, at least one first-order ghost and at least one second-order ghost comprised in the two-dimensional Range-Doppler map,
wherein the first-order ghost (M1, M2) and the second-order ghost (S) correspond to indirect propagation paths between the multiple-input-multiple-output radar and the at least one target resulted from scatter of the at least one target and a specular reflection of the indoor
dense static object, respectively, the at least one second-order ghost (S) being the mirror image of the real target (T).

2. The method according to claim 1,
wherein the linear pattern extraction algorithm is a Hough transform based linear pattern extraction algorithm.

3. The method according to claim 1 or 2,
wherein the method further comprises the step of recognizing, by means of the linear pattern extraction algorithm, a set of three points in the two-dimensional Range-Doppler map corresponding to the detections from the at least one target, the at least one first-order ghost, and the at least one second-order ghost.

4. The method according to claim 3,
wherein the set of three points in the two-dimensional Range-Doppler map are aligned and are preferably equidistant.

5. The method according to any of claims 1 to 4,
wherein the method further comprises the step of comparing respective Range and Doppler values of the set of three points in the two-dimensional Range-Doppler map, thereby recognizing the respective detections from the at least one target, the at least one first-order ghost, and the at least one second-order ghost.

6. The method according to any of claims 1 to 5,
wherein the method further comprises the step of implementing a tracking algorithm in order to estimate a state of the at least one target.

7. The method according to any of claims 1 to 6,
wherein the method further comprises the step of implementing a joint target tracking and wall estimation algorithm in order to estimate a state of the at least one target and of the at least one second-order ghost.

8. The method according to claim 6 or 7,
wherein the tracking algorithm comprises non-linear filtration, preferably an Extended Kalman Filter.

9. The method according to any of claims 1 to 8,
wherein the method further comprises the step of implementing a model, preferably a Simultaneous Target and Multipath Positioning model, in order to estimate parameters of a reflector associated with the at least one first-order ghost and the at least one second-order ghost.

10. The method according to any of claims 1 to 9,
wherein the two-dimensional Range-Doppler map further comprises detections from a plurality of targets, a plurality of first-order ghosts, and a plurality of second-order ghosts.

11. The method according to claim 10,
wherein the method further comprises the step of applying an iterative algorithm comprising the steps of claims 1 to 9 for each of the plurality of targets.

12. The method according to any of claims 1 to 11,
wherein the at least one target or the plurality of targets are non-rigid targets.

13. The method according to any of claims 1 to 12,
wherein the multiple-input-multiple-output radar is a frequency-modulated continuous-wave radar.

14. A system (300) for indoor multipath ghost recognition for at least one target with respect to an indoor dense static object in form of a wall, the system (300) comprises:
a multiple-input-multiple-output radar (301) with collocated antennas (TX1,TX2,RX1,RX2), and
a processor (303) operably coupled to the multiple-input-multiple-output radar (301),
wherein the processor (303) is configured to generate a two-dimensional Range-Doppler map for N number of consecutive radar data frames comprising Range-Doppler detections, wherein the processor (303) is further configured to overlap the Range-Doppler detections for each of the N number of consecutive radar data frames,
wherein the processor (303) is further configured to apply a temporal clustering algorithm to the N number of consecutive radar data frames,
wherein the processor (303) is further configured to apply a linear pattern extraction algorithm on the two-dimensional Range-Doppler map to recognise a pattern of detections from the at least one target, at least one first-order ghost and at least one second-order ghost comprised in the two-dimensional Range-Doppler map,
wherein the first-order ghost (M1, M2) and the second-order ghost (S) correspond to indirect propagation paths between the multiple-input-multiple-output radar and the at least one target resulted from scatter of the at least one target and a specular reflection of the indoor dense static object, respectively, the at least one second-order ghost (S) being the mirror image of the real target (T).

15. The system according to claim 14,
wherein the linear pattern extraction algorithm is a Hough transform based linear pattern extraction algorithm.

## Patentansprüche

1. Verfahren zur Erkennung von Geisterbildern einer Mehrwegeausbreitung in Innenräumen bei einem Mehrfacheingabe-Mehrfachausgabe-Radar mit kolokalisierten Antennen für mindestens ein Ziel in Bezug auf ein dichtes statisches Innenraumobjekt in Form einer Wand, wobei das Verfahren, das durch einen Prozessor (303) ausgeführt wird, der mit dem Mehrfacheingabe-Mehrfachausgabe-Radar (301) wirkgekoppelt ist, die folgenden Schritte umfasst:
Erzeugen (201) einer zweidimensionalen Entfernungs-Doppler-Karte für eine Anzahl N von aufeinanderfolgenden Radardatenrahmen, die Entfernungs-Doppler-Detektionen umfassen,
Überlagern der Entfernungs-Doppler-Detektionen für jeden der Anzahl N von aufeinanderfolgenden Radardatenrahmen, Anwenden (202) eines zeitlichen Clustering-Algorithmus auf die Anzahl N von aufeinanderfolgenden Radardatenrahmen, und
Anwenden (203) eines linearen Musterextraktionsalgorithmus auf die zweidimensionale Entfernungs-Doppler-Karte, um ein Muster aus Detektionen von dem mindestens einen Ziel, mindestens einem Geisterbild erster Ordnung und mindestens einem Geisterbild zweiter Ordnung zu erkennen, die in der zweidimensionalen Entfernungs-Doppler-Karte enthalten sind,
wobei das Geisterbild (M1, M2) erster Ordnung und das Geisterbild (S) zweiter Ordnung indirekten Ausbreitungspfaden zwischen dem Mehrfacheingabe-Mehrfachausgabe-Radar und dem mindestens einen Ziel entsprechen, die aus einer Streuung des mindestens einen Ziels bzw. einer Spiegelreflexion des dichten statischen Innenobjekts resultierten, wobei das mindestens eine Geisterbild (S) zweiter Ordnung das Spiegelbild des realen Ziels (T) ist.

2. Verfahren nach Anspruch 1,
wobei der lineare Musterextraktionsalgorithmus ein auf einer Hough-Transformation basierender linearer Musterextraktionsalgorithmus ist.

3. Verfahren nach Anspruch 1 oder 2,
wobei das Verfahren ferner den Schritt Erkennen, mittels des linearen Musterextraktionsalgorithmus, eines Satzes von drei Punkten in der zweidimensionalen Entfernungs-Doppler-Karte umfasst, die den Detektionen von dem mindestens einen Ziel, dem mindestens einen Geisterbild erster Ordnung und dem mindestens einen Geisterbild zweiter Ordnung entsprechen.

4. Verfahren nach Anspruch 3,
wobei der Satz von drei Punkten in der zweidimensionalen Entfernungs-Doppler-Karte ausgerichtet und vorzugsweise äquidistant sind.

5. Verfahren nach einem der Ansprüche 1 bis 4,
wobei das Verfahren ferner den Schritt Vergleichen jeweiliger Entfernungs- und Doppler-Werte des Satzes von drei Punkten in der zweidimensionalen Entfernungs-Doppler-Karte umfasst, wodurch die jeweiligen Detektionen von dem mindestens einen Ziel, dem mindestens einen Geisterbild erster Ordnung und dem mindestens einen Geisterbild zweiter Ordnung erkannt werden.

6. Verfahren nach einem der Ansprüche 1 bis 5,
wobei das Verfahren ferner den Schritt Implementieren eines Verfolgungsalgorithmus umfasst, um einen Zustand des mindestens einen Ziels zu schätzen.

7. Verfahren nach einem der Ansprüche 1 bis 6,
wobei das Verfahren ferner den Schritt Implementieren eines gemeinsamen Zielverfolgungs- und Wandschätzungsalgorithmus umfasst, um einen Zustand des mindestens einen Ziels und des mindestens einen Geisterbildes zweiter Ordnung zu schätzen.

8. Verfahren nach Anspruch 6 oder 7,
wobei der Verfolgungsalgorithmus eine nichtlineare Filterung, vorzugsweise einen erweiterten Kalman-Filter, umfasst.

9. Verfahren nach einem der Ansprüche 1 bis 8,
wobei das Verfahren ferner den Schritt Implementieren eines Modells, vorzugsweise eines Simultaneous Target and Multipath Positioning-Modells, umfasst, um Parameter eines Reflektors zu schätzen, der mit dem mindestens einen Geisterbild erster Ordnung und dem mindestens einen Geisterbild zweiter Ordnung assoziiert ist.

10. Verfahren nach einem der Ansprüche 1 bis 9,
wobei die zweidimensionale Entfernungs-Doppler-Karte ferner Detektionen von mehreren Zielen, mehreren Geistern erster Ordnung und mehreren Geistern zweiter Ordnung umfasst.

11. Verfahren nach Anspruch 10,
wobei das Verfahren ferner den Schritt Anwenden eines iterativen Algorithmus umfasst, der die Schritte der Ansprüche 1 bis 9 für jedes der mehreren Ziele umfasst.

12. Verfahren nach einem der Ansprüche 1 bis 11,
wobei das mindestens eine Ziel oder die mehreren Ziele nicht starre Ziele sind.

13. Verfahren nach einem der Ansprüche 1 bis 12,
wobei das Mehrfacheingabe-Mehrfachausgabe-Radar ein frequenzmoduliertes Dauerstrichradar ist.

14. System (300) zur Erkennung von Geisterbildern einer Mehrwegeausbreitung in Innenräumen für mindestens ein Ziel in Bezug auf ein dichtes statisches Innenraumobjekt in Form einer Wand,
wobei das System (300) Folgendes umfasst:
ein Mehrfacheingabe-Mehrfachausgabe-Radar (301) mit kolokalisierten Antennen (TX1, TX2, RX1, RX2), und
einen Prozessor (303), der mit dem Mehrfacheingabe-Mehrfachausgabe-Radar (301) wirkgekoppelt ist,
wobei der Prozessor (303) dazu ausgelegt ist, eine zweidimensionale Entfernungs-Doppler-Karte für eine Anzahl N von aufeinanderfolgenden Radardatenrahmen zu erzeugen, die Entfernungs-Doppler-Detektionen umfassen,
wobei der Prozessor (303) ferner dazu ausgelegt ist, die Entfernungs-Doppler-Detektionen für jeden der Anzahl N von aufeinanderfolgenden Radardatenrahmen zu überlagern,
wobei der Prozessor (303) ferner dazu ausgelegt ist, einen zeitlichen Clustering-Algorithmus auf die Anzahl N von aufeinanderfolgenden Radardatenrahmen anzuwenden,
wobei der Prozessor (303) ferner dazu ausgelegt ist, einen linearen Musterextraktionsalgorithmus auf die zweidimensionale Entfernungs-Doppler-Karte anzuwenden, um ein Muster aus Detektionen von dem mindestens einen Ziel, mindestens einem Geisterbild erster Ordnung und mindestens einem Geisterbild zweiter Ordnung zu erkennen, die in der zweidimensionalen Entfernungs-Doppler-Karte enthalten sind,
wobei das Geisterbild (M1, M2) erster Ordnung und das Geisterbild (S) zweiter Ordnung indirekten Ausbreitungspfaden zwischen dem Mehrfacheingabe-Mehrfachausgabe-Radar und dem mindestens einen Ziel entsprechen, die aus einer Streuung des mindestens einen Ziels bzw. einer Spiegelreflexion des dichten statischen Innenobjekts resultierten, wobei das mindestens eine Geisterbild (S) zweiter Ordnung das Spiegelbild des realen Ziels (T) ist.

15. System nach Anspruch 14,
wobei der lineare Musterextraktionsalgorithmus ein auf einer Hough-Transformation basierender linearer Musterextraktionsalgorithmus ist.

## Revendications

1. Procédé de reconnaissance de fantômes à trajets multiple en intérieur pour un radar à entrées multiples-sorties multiples avec antennes colocalisées pour au moins une cible vis-à-vis d'un objet statique dense intérieur sous la forme d'une paroi, le procédé, étant exécuté par un processeur (303) couplé fonctionnellement au radar à entrées multiples-sorties multiples (301), comprenant les étapes de :
la génération (201) d'une carte à portée Doppler bidimensionnelle pour un nombre N de trames de données radar consécutives comprenant des détections à portée Doppler,
le chevauchement des détections à portée Doppler pour chacune du nombre N de trames de données radar consécutives,
l'application (202) d'un algorithme de regroupement temporel au nombre N de trames de données radar consécutives, et
l'application (203) d'un algorithme d'extraction de motifs linéaires sur la carte à portée Doppler bidimensionnelle pour reconnaître un motif de détections à partir de l'au moins une cible, d'au moins un fantôme de premier ordre et d'au moins un fantôme de second ordre compris dans la carte à portée Doppler bidimensionnelle, le fantôme de premier ordre (M1, M2) et le fantôme de second ordre (S) correspondant à des chemins de propagation indirecte entre le radar à entrées multiples-sorties multiples et l'au moins une cible résultant respectivement de la diffusion de l'au moins une cible et d'une réflexion spéculaire de l'objet statique dense intérieur, l'au moins un fantôme de second ordre (S) étant l'image miroir de la cible réelle (T).

2. Procédé selon la revendication 1,
l'algorithme d'extraction de motifs linéaires étant un algorithme d'extraction de motifs linéaires basé sur une transformée de Hough.

3. Procédé selon la revendication 1 ou 2,
le procédé comprenant en outre l'étape de reconnaissance, au moyen de l'algorithme d'extraction de motifs linéaires, d'un ensemble de trois points dans la carte à portée Doppler bidimensionnelle correspondant aux détections à partir de l'au moins une cible, de l'au moins un fantôme de premier ordre et de l'au moins un fantôme de second ordre.

4. Procédé selon la revendication 3,
l'ensemble des trois points de la carte à portée Doppler bidimensionnelle étant alignés et étant de préférence équidistants.

5. Procédé selon l'une quelconque des revendications 1 à 4,
le procédé comprenant en outre l'étape de comparaison des valeurs de portée et de Doppler respectives de l'ensemble de trois points dans la carte à portée Doppler bidimensionnelle, reconnaissant ainsi les détections respectives à partir de l'au moins une cible, de l'au moins un fantôme de premier ordre et de l'au moins un fantôme de second ordre.

6. Procédé selon l'une quelconque des revendications 1 à 5,
le procédé comprenant en outre l'étape de mise en œuvre d'un algorithme de suivi pour estimer un état de l'au moins une cible.

7. Procédé selon l'une quelconque des revendications 1 à 6,
le procédé comprenant en outre l'étape de mise en œuvre d'un algorithme conjoint de suivi de cible et d'estimation de paroi pour estimer un état de l'au moins une cible et de l'au moins un fantôme de second ordre.

8. Procédé selon la revendication 6 ou 7,
l'algorithme de poursuite comprenant un filtrage non linéaire, de préférence un filtre de Kalman étendu.

9. Procédé selon l'une quelconque des revendications 1 à 8,
le procédé comprenant en outre l'étape de mise en œuvre d'un modèle, préférentiellement d'un modèle de positionnement cible et multivoies simultané, pour estimer des paramètres d'un réflecteur associé à l'au moins un fantôme de premier ordre et à l'au moins un fantôme de second ordre.

10. Procédé selon l'une quelconque des revendications 1 à 9,
la carte à portée Doppler bidimensionnelle comprenant en outre des détections à partir d'une pluralité de cibles, d'une pluralité de fantômes de premier ordre et d'une pluralité de fantômes de second ordre.

11. Procédé selon la revendication 10,
le procédé comprenant en outre l'étape d'application d'un algorithme itératif comprenant les étapes selon les revendications 1 à 9 pour chacune de la pluralité de cibles.

12. Procédé selon l'une quelconque des revendications 1 à 11,
l'au moins une cible ou la pluralité de cibles étant des cibles non rigides.

13. Procédé selon l'une quelconque des revendications 1 à 12,
le radar à entrées multiples-sorties multiples étant un radar à ondes continues modulé en fréquence.

14. Système (300) de reconnaissance de fantômes à trajets multiple en intérieur pour au moins une cible vis-à-vis d'un objet statique dense intérieur sous forme de paroi,
le système (300) comprenant :
un radar à entrées multiples-sorties multiples (301) avec antennes colocalisées (TX1, TX2, RX1, RX2), et
un processeur (303) couplé de manière fonctionnelle au radar à entrées multiples-sorties multiples (301),
le processeur (303) étant configuré pour générer une carte à portée Doppler bidimensionnelle pour un nombre N de trames de données radar consécutives comprenant des détections à portée Doppler,
le processeur (303) étant en outre configuré pour chevaucher les détections à portée Doppler pour chacune du nombre N de trames de données radar consécutives,
le processeur (303) étant en outre configuré pour appliquer un algorithme de regroupement temporel au nombre N de trames de données radar consécutives,
le processeur (303) étant en outre configuré pour appliquer un algorithme d'extraction de motifs linéaires sur la carte à portée Doppler bidimensionnelle pour reconnaître un motif de détections à partir de l'au moins une cible, d'au moins un fantôme de premier ordre et d'au moins un fantôme de second ordre compris dans la carte à portée Doppler bidimensionnelle,
le fantôme de premier ordre (M1, M2) et le fantôme de second ordre (S) correspondant à des chemins de propagation indirecte entre le radar à entrées multiples-sorties multiples et l'au moins une cible résultant respectivement de la diffusion de l'au moins une cible et d'une réflexion spéculaire de l'objet statique dense intérieur, l'au moins un fantôme de second ordre (S) étant l'image miroir de la cible réelle (T).

15. Système selon la revendication 14,
l'algorithme d'extraction de motifs linéaires étant un algorithme d'extraction de motifs linéaires basé sur une transformée de Hough.
